# FASCICULE DE BREVET EUROPEEN

(11) **EP 3 706 556 B1**
(45) Date de publication et mention de la délivrance du brevet: **04.12.2024**
(21) Numéro de dépôt: 18808406.5
(22) Date de dépôt: 22.10.2018
(51) Int. Cl.: A01K 27/00, A44B 11/04, A44B 11/22

(54) **STRUCTURE DE SERRAGE DE COLLIER**
SPANNVORRICHTUNG EINEM HALSBAND
COLLAR TIGHTENING STRUCTURE

(30) Priorité: 26.10.2017 FR 1771129
(43) Date de publication de la demande: 16.09.2020
(73) Titulaire: AB7 Santé, 31450 Deyme (FR)
(72) Inventeur: CHELLE, René, 31450 Deyme (FR); VILBERT, Arnaud, 31450 Baziège (FR); CHABOT, Giovanni, 31300 Toulouse (FR)
(86) Numéro de dépôt international: PCT/FR2018/000238
(87) Numéro de publication internationale: WO 2019/081822

(56) Documents cités:
- DE-A1- 102012 100 385
- FR-A1- 2 005 940
- FR-A1- 2 180 539
- US-A1- 2014 223 696
- US-A1- 2017 202 183

## Description

La présente invention se situe dans le domaine des structures de fermeture de colliers portés par l'homme ou par des animaux de compagnie. Particulièrement, l'invention a trait à une structure pour la fermeture et le serrage d'un collier consistant en une boucle creuse pourvue, dans son espace intérieur, de deux structures proéminentes faisant face l'une par rapport à l'autre de manière à assurer le serrage d'une lanière crantée qui la traverse.

Il est fréquent que des colliers en plastique portés par des animaux de compagnie, particulièrement des chiens, se détachent en cours d'utilisation, ce qui constitue un inconvénient. Ce cas est souvent rencontré particulièrement lorsque l'on est en présence d'un jeune animal très joueur ou lorsqu'un animal se gratte avec ses pattes. C'est également le cas des colliers en plastique chargés de matière active qui se diffuse pendant une longue durée, en ce sens que la libération progressive de la matière active est susceptible d'entraîner une rétractation du plastique jusqu'à induire, dans certain cas, un flottement de la lanière au niveau de la structure de serrage, voire un manque de tenue.

Pour résoudre l'inconvénient susmentionné, la technique antérieure propose plusieurs solutions. On connaît par exemple des colliers pourvus d'un système de réglage comprenant une boucle métallique fixée à l'une de ses extrémités, ladite boucle comportant un ardillon lequel s'insère dans un trou situé sur la lanière pour assurer la fixation et le serrage. Une autre variante consiste en une boucle métallique pourvue de protubérance qui vient s'insérer dans des trous prévus sur la lanière (voir brevet EP2047744). D'autres systèmes consistent en la fourniture de boucle apte à enserrer à la manière d'un « sandwich » les lanières (voir brevets FR2729833, FR2619989, EP0488522). Encore un autre système consiste en une boucle métallique plate pourvue de deux fentes, mais dépourvue d'espace intérieur ; la lanière en textile vient s'insérer par en dessous dans la première fente, repasse par-dessus, puis se réinsère dans la seconde fente (voir brevets US534380, US5000125). Encore un autre système consiste en une boucle métallique munie d'une languette articulée qui entre en prise dans une entaille portée par la lanière pour assurer à la fois un réglage fin et le serrage du collier (voir FR2841739, US6715449, US5749127, WO2008155791). Encore une variante consiste en une boucle munie de deux portions mâle et femelle dont la fermeture est assurée par encliquetage de la portion mâle dans la portion femelle (voir brevet US6378466).

Tous les systèmes de serrage de collier décrit dans l'art antérieur sont constitués d'au moins une boucle amovible, fixées sur une lanière. Il résulte de ces systèmes que leur mode de fabrication nécessite une étape supplémentaire d'assemblage ou de fixation.

La présente invention se propose de fournir un collier pour animal de compagnie pourvu d'une structure de serrage consistant en une boucle formant un ensemble monobloc avec la lanière du collier pour lequel un serrage suffisant est recherché pour éviter son détachement au cours du port par l'animal.

Le document FR 2 180 539 A1 décrit un collier monobloc à action insecticide pour animal de compagnie, ce collier comprenant une lanière percée de trous coopérant avec une boucle de fermeture du collier.

La présente invention a, en conséquence, pour objet un collier monobloc en matériau plastique souple selon la revendication indépendante 1, ce collier étant destiné à être porté par l'homme ou un animal de compagnie, ledit matériau plastique étant susceptible de renfermer une matière active, le collier comportant une structure de serrage consistant en une boucle localisée sensiblement sur sa partie proximale, boucle dont l'intérieur creux définit un tunnel délimité sur sa partie supérieure par un plafond et sur sa partie inférieure par un plancher, ledit tunnel étant apte à recevoir longitudinalement et par enfilage, une lanière qui constitue la partie distale du collier, lanière dont la face intérieure destinée à être au contact avec le plancher de la boucle, est pourvue d'une pluralité d'entailles qui la traversent transversalement de part en part, caractérisé en ce que d'une part, une première structure proéminente est ménagée longitudinalement sur le plafond de la boucle et que d'autre part, une seconde structure proéminente est ménagée transversalement au centre du plancher de la boucle, la première et la seconde structures proéminentes faisant face à face sans se toucher et que l'espace entre la première structure proéminente et le plancher est destiné au passage de la lanière de sorte que lorsque la lanière est enfilée à l'intérieur de la boucle et afin d'assurer le serrage du collier dans son ensemble, la première structure proéminente vient en appui sur la face supérieure de ladite lanière de manière à y exercer une pression de maintien localisée et que la seconde structure proéminente entre en prise avec une entaille située sur la face inférieure de ladite lanière.

Avantageusement, la pression de maintien localisée exercée sur la lanière y provoque une légère déformation.

Selon un mode de réalisation, la première structure proéminente ménagée longitudinalement sur le plafond de la boucle présente, en outre, deux bosses situées chacune aux extrémités de ladite structure proéminente de sorte que lesdites bosses enjambent l'entaille de la lanière pour assurer le placage de celle-ci.

Selon un mode de réalisation, la partie centrale de la première structure proéminente est légèrement en retrait par rapport aux deux bosses.

Selon un mode de réalisation, la seconde structure proéminente ménagée transversalement au centre du plancher de la boucle constitue une dent dont la partie latérale située du côte opposé du sens d'introduction de la lanière est au moins au droit du plancher de la boucle, ou est légèrement inclinée vers le sens de l'enfilement de la lanière, ce qui permet de renforcer le grip du cran si les sollicitations subies par l'ensemble du collier venaient à défaire la lanière introduite dans la boucle.

L'espace entre la bosse et le plancher est symbolisé par « y » ; l'espace entre la partie supérieure de la dent et l'arête de la bosse est symbolisé par « x » ; « EL » représente l'épaisseur de la lanière et « EC » symbolise l'épaisseur de la lanière au niveau du cran dont la valeur est égale à différence entre l'épaisseur de la lanière (EL) à la quelle on soustrait la profondeur « p » d'une entaille

Selon un mode de réalisation, la grandeur du ratio (x/y) est sensiblement proportionnelle à celle du ratio (épaisseur du cran sur épaisseur de la lanière) selon la relation 0,9 EC/EL < x/y < 1,1 EC/EL. Selon cette équation, les constantes 0,9 et 1,1 correspondent aux degrés de tolérance relative du serrage qui se traduit par une légère liberté de mouvement de la lanière insérée dans la boucle. Conformément à cette équation, il devient possible de faire varier tant les valeurs de « x » que celles de « y » et ce pour n'importe quelle dimension d'un collier ou plus généralement d'un dispositif comportant une structure de serrage identique à celle de la présente invention.

Par exemple, pour un collier destiné à être porté par un animal de compagnie, la valeur de l'espace « x » entre la partie centrale de la première structure proéminente et la dent est comprise entre 1,2 et 2,1 mm et la valeur de l'espace « y » entre la bosse et le plancher est comprise entre 2 et 3,2 mm.

Selon un mode de réalisation, le plancher comporte, outre la dent localisée sur la partie centrale, une dent située sur la partie proximale de la boucle et une autre dent située sur la partie distale de la boucle.

Selon un mode de réalisation, les dents sont équidistantes d'une longueur correspondant à la distance entre deux entailles successives de sorte que chacune des deux dents centre en prise avec des entailles lorsque la lanière est enfilée dans la boucle.

Selon un mode de réalisation, l'entaille de la lanière présente une section sensiblement en forme de parallélogramme, d'antiparallélogramme, de triangule ou l'association de ces formes. Préférentiellement, l'entaille présente une section sensiblement en forme d'antiparallélogramme Selon un mode de réalisation, la boucle présente des ouvertures sur chacune de ses faces latérales, ces ouvertures délimitent une structure d'étranglement à la fois du plafond et du plancher de la boucle, le plafond et le plancher de la boucle étant reliés entre eux par des pattes.

La boucle et la lanière constituent un ensemble monobloc en matériau plastique souple bien connu de l'homme du métier. Les polymères thermoplastiques sont des polymères biodégradables ou non, choisis dans le groupe formé par les polyoléfines et leurs dérivés choisis parmi les polyéthylènes (PE), les polypropylènes (PP), les copolymères d'éthylène et d'acétate de vinyle (EVA), les éthers bloc amides (EBA), les polychlorures de vinyles (PVC), les polyamides, les copolyamides et leurs dérivés, les polyuréthanes et leurs dérivés, les styréniques et leurs dérivés choisis parmi les copolymères polystyrène-poly(éthylène-butylène)-polystyrènes (SEBS), les copolymères polystyrène-polyisoprène-polystyrène (SIS), les copolymères polystyrène- polybutadiène-polystyrènes (SBS), les thermoplastiques vulcanisés, les agropolymères et leurs dérivés (polysaccharides, amidon, cellulose, protéines), les polyesters et leurs dérivés ainsi que le mélange de tous ces polymères.

Avantageusement, la dureté du matériau plastique souple constituant le collier est comprise entre 60 Shore A et 60 Shore D, préférentiellement entre 80 et 95 Shore A.

Selon un mode de réalisation, le collier renferme une matière active à effet biocide, médicamenteux ou cosmétique. Plus particulièrement, la matière active est adaptée pour l'obtention d'une action traitante choisie parmi les actions insecticide, répulsive insectes, attractive, antifongique, apaisante, calinante, parfumante, de bien être ou l'association de ceux-ci. De manière connue, sans que l'énumération qui suit soit exhaustive, la matière active est choisie dans le groupe formé par les huiles essentielles, les constituants majoritaires des huiles essentielles et leurs dérivés, les pyréthrinoïdes, les carbamates, les formamidines, l'icaridine, le DEET, les composés nicotinyles et leurs dérivés, les pyréthrines, les extraits et macérâts végétaux, les huiles végétales, les alcaloïdes, les parfums, les médicaments anti-inflammatoires non stéroïdiens (AINS).

Afin de bien comprendre l'invention, les figures suivantes sont fournies pour illustrer un mode de réalisation préféré de l'invention, sans pour autant en restreindre sa portée.
Figure 1 : vue de face du collier conforme à l'invention
Figure 2 : vue en perspective du collier conforme à l'invention
Figure 3 : vue en coupe transversale de la lanière enfilée dans la boucle montrant le mode du serrage du collier conforme à l'invention.

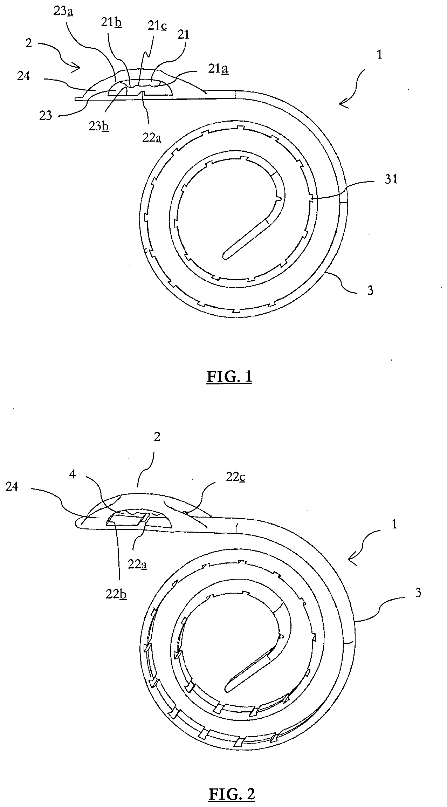

Sur la figure 1, on a représenté un collier 1 dont la partie proximale comporte une boucle 2 et la partie distale constitue une lanière 3 pourvue d'une pluralité d'entailles 31 qui la traversent de part en part. L'intérieur de la boucle 2 est creuse et définit un tunnel 23, dont la partie supérieure constitue un plafond 23a tandis que la partie inférieure constitue un plancher 23b. Le plafond 23a est pourvu d'une structure proéminente 21, dont chacune de ses deux extrémités 21a et 21b constituent des bosses lesquelles étant plus saillantes par rapport à la partie centrale 21c. La partie centrale du plancher 23b est pourvue d'une dent 22a dont la pointe fait face à la partie inférieure de la structure proéminente 21, précisément au niveau de la partie centrale 21c. Le plafond 23a de la boucle 2 est relié à la lanière 3 par l'intermédiaire des pattes 24.

Sur la figure 2, on voit que le plancher 23b de la boucle 2 est également pourvu de deux autres dents 22b et 22c situées respectivement sur la partie proximale et la partie distale de la boucle 2. Sur cette figure, on remarque que la boucle 2 présente une ouverture 4 sur les deux faces latérales gauche et droite.

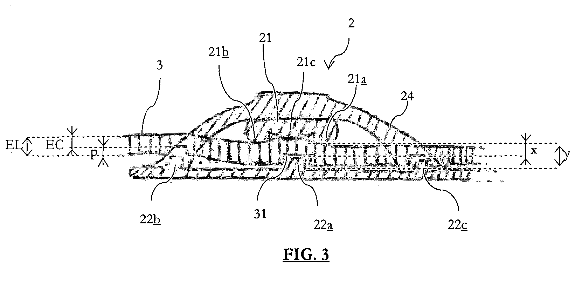

Sur la vue en coupe de la figure 3, on voit que la lanière 3 est enfilée dans le tunnel de la boucle 2. Chacune des dents 22a, 22b et 22c sont en prise avec des entailles 31. Les deux extrémités 21a et 21b de la structure proéminente 21 enjambent la dent 22a de sorte que la partie 21c vient en appui sur la partie où se trouve l'entaille 31 pour y exercer une légère pression de part et d'autre de la dent 22a afin de plaquer la lanière 3 pour assurer l'enfoncement de la dent 22a dans l'entaille 31. Il en résulte alors un serrage de la lanière 3 dans la boucle 2. Les dents 22b et 22c assurent un maintien et un bon positionnement de la lanière 3 à l'intérieur de la boucle 2. Sur cette figure, on a symbolisé par « y » l'espace entre la bosse (21a, 21b) et le plancher 23b, par « x » l'espace entre la partie supérieure de la dent 22a et l'arête de la bosse 21a, par « EL » l'épaisseur de la lanière 3, par « EC » l'épaisseur du cran et par « p » la profondeur du cran. Les valeurs des paramètres x, y, EL et EC du mode de réalisation décrit dans cette figure sont respectivement 1,7 mm, 2,6 mm, 2,47 mm et 1,52 mm.

La structure de serrage du collier conforme à l'invention présente plusieurs avantages, notamment par sa simplicité car le collier et la boucle forment un ensemble monobloc, ce qui facilite la mise en forme par des techniques de plasturgie connues. Par ailleurs, les essais sur des animaux de compagnie ont pu confirmer que le collier conforme à l'invention ne se défait pas lors du grattage contrairement aux autres colliers du même type, ce qui démontre bien l'efficacité de la structure de serrage.

Encore un autre avantage du collier selon l'invention est qu'il est possible d'adapter les dimensions du collier dans son ensemble en respectant la même configuration de la boucle.

Il est entendu que l'invention ne se limite pas aux modes de réalisation exemplifiés, mais couvre également d'autres variantes de liens à serrage ajustable et réversible couvertes par les revendications suivantes.

## Revendications

1. Collier monobloc (1) en matériau plastique souple destiné à être porté par l'homme ou un animal de compagnie, ledit matériau plastique étant susceptible de renfermer une matière active, le collier (1) comportant une structure de serrage consistant en une boucle (2) localisée sensiblement sur sa partie proximale, boucle (2) dont l'intérieur creux définit un tunnel (23) délimité sur sa partie supérieure par un plafond (23a) et sur sa partie inférieure par un plancher (23b), ledit tunnel (23) étant apte à recevoir longitudinalement et par enfilage, une lanière (3) qui constitue la partie distale du collier (1), lanière (3) dont la face intérieure destinée à être au contact avec le plancher (23b) de la boucle (2), est pourvue d'une pluralité d'entailles (31) qui la traversent transversalement de part en part, le collier comprenant d'une part, une première structure proéminente (21) ménagée longitudinalement sur le plafond (23a) de la boucle (2) et d'autre part, une seconde structure proéminente (22a) ménagée transversalement au centre du plancher (23b) de la boucle (2), la première et la seconde structures proéminentes (21,22a) faisant face à face sans se toucher, l'espace (y) entre la première structure proéminente (21) et le plancher (23b) étant destiné au passage de la lanière (3) de sorte que lorsque la lanière (3) est enfilée à l'intérieur de la boucle (2) et afin d'assurer le serrage du collier (1) dans son ensemble, la première structure proéminente (21) vient en appui sur la face supérieure de ladite lanière (3) de manière à y exercer une pression de maintien localisée et que la seconde structure proéminente (22a) entre en prise avec une entaille (31) située sur la face inférieure ladite lanière (3).

2. Collier selon la revendication 1, **caractérisé en ce que** la première structure proéminente (21) ménagée longitudinalement sur le plafond (23a) de la boucle (2) présente, en outre, deux bosses (21a,21b) situées chacune aux extrémités de ladite structure proéminente de sorte que lesdites bosses enjambent l'entaille (31) de la lanière (3) pour assurer le placage de celle-ci.

3. Collier selon la revendication 2, **caractérisé en ce que** la partie centrale (21c) de la première structure proéminente (21) est légèrement en retrait par rapport aux deux bosses (21a,2112).

4. Collier selon la revendication 1, **caractérisé en ce que** la seconde structure proéminente (22a) ménagée transversalement au centre du plancher (23b) de la boucle (2) constitue une dent (22a) dont la partie latérale situé du côte opposé du sens d'introduction de la lanière (3) est au moins au droit du plancher (23b) de la boucle (2), ou est légèrement inclinée vers le sens de l'enfilement de la lanière.

5. Collier selon les revendications 2 et 4, et éventuellement également selon la revendication 3, **caractérisé en ce que** la grandeur du ratio (x/y) est sensiblement proportionnelle à celle du ratio (épaisseur du cran sur épaisseur de la lanière) selon la relation 0,9 EC/EL < x/y < 1,1 EC/EL où l'espace entre la bosse (21a) et le plancher (23b) est symbolisé par « y » ; l'espace entre la partie supérieure de la dent (22a) et l'arête de la bosse (21a) est symbolisé par « x » ; « EL » représente l'épaisseur de la lanière et « EC » symbolise l'épaisseur du cran dont la valeur est égale à différence entre l'épaisseur (EL) de la lanière (3) à la quelle on soustrait la profondeur (p) d'une entaille (31).

6. Collier selon l'une des revendications 1 et 4, **caractérisé en ce que** le plancher (23b) comporte, outre la dent (22a) localisée sur sa partie centrale, une dent (22b) située sur la partie proximale de la boucle (2) et une autre dent (22c) située sur la partie distale de la boucle (2).

7. Collier selon la revendication 6, **caractérisé en ce que** les dents (22a,22b,22c) sont équidistantes d'une longueur correspondant à l'écartement entre deux entailles (31) successives de sorte que chacune des deux dents (22b) et (22c) entre en prise avec des entailles (31) lorsque la lanière (3) est enfilée dans la boucle (2).

8. Collier selon l'une des revendications 1 à 7, **caractérisé en ce que** l'entaille (31) de la lanière (3) présente une section sensiblement en forme de parallélogramme, d'antiparallélogramme, de triangle ou l'association de ces formes.

9. Collier selon l'une des revendications 1 à 8, **caractérisé en ce que** la boucle (2) présente des ouvertures (4) sur chacune de ses faces latérales, ces ouvertures délimitent une structure d'étranglement à la fois du plafond (23a) et du plancher (23b) de la boucle (2), le plafond et le plancher de la boucle étant reliés entre eux par des pattes (24).

10. Collier selon la revendication 1, **caractérisé en ce que** la dureté du matériau plastique souple constituant le collier est comprise entre 60 Shore A et 60 Shore D, préférentiellement entre 80 et 95 Shore A.

11. Collier selon l'une des revendications 1 à 10, **caractérisé en ce que** le collier renferme une matière active à effet biocide, médicamenteux ou cosmétique, ladite matière active étant adaptée pour l'obtention d'une action traitante choisie parmi les actions insecticide, répulsive insectes, attractive, antifongique, apaisante, calmante, parfumante, de bien être ou l'association de ceux-ci.

## Patentansprüche

1. Einteiliges Halsband (1) aus flexiblem Kunststoffmaterial, das dazu vorgesehen ist, von Menschen oder Haustieren getragen zu werden, wobei das Kunststoffmaterial einen Wirkstoff enthalten kann, wobei das Halsband (1) eine Festziehstruktur umfasst, die aus einer im Wesentlichen an seinem proximalen Ende angeordneten Schnalle (2) besteht, deren hohler Innenraum einen Tunnel (23) definiert, der an seiner Oberseite durch eine Decke (23a) und an seiner Unterseite durch einen Boden (23b) begrenzt ist, wobei der Tunnel (23) dazu geeignet ist, in Längsrichtung und durch Einfädeln einen Riemen (3) aufzunehmen, der den distalen Teil des Halsbands (1) bildet, wobei die innere Seite des Riemens (3), die dazu bestimmt ist, mit dem Boden (23b) der Schnalle (2) in Kontakt zu kommen, mit mehreren Kerben (31) versehen ist, die quer von einer Seite zur anderen verlaufen, wobei das Halsband einerseits eine erste hervorstehende Struktur (21) aufweist, die in Längsrichtung an der Decke (23a) der Schnalle ausgebildet ist (2) und andererseits eine zweite hervorstehende Struktur (22a), die quer in der Mitte des Bodens (23b) der Schnalle (2) ausgebildet ist, wobei die erste und zweite hervorstehende Struktur (21, 22a) einander zugewandt sind, ohne sich zu berühren, wobei der Raum (y) zwischen der ersten hervorstehenden Struktur (21) und dem Boden (23b) für den Durchgang des Riemens (3) vorgesehen ist, sodass beim Einfädeln des Riemens (3) ins Innere der Schnalle (2) und um das Festziehen des Halsbandes (1) als Ganzes zu gewährleisten, die erste hervorstehende Struktur (21) auf der Oberseite des Riemens (3) zur Anlage kommt, um einen örtlich begrenzten Haltedruck darauf auszuüben, und die zweite hervorstehende Struktur (22a) in eine Kerbe (31) eingreift, die sich an der Unterseite des Riemens (3) befindet.

2. Halsband nach Anspruch 1, **dadurch gekennzeichnet, dass** die erste hervorstehende Struktur (21), die in Längsrichtung an der Decke (23a) der Schnalle (2) ausgebildet ist, ferner zwei Vorsprünge (21a, 21b) aufweist, die sich jeweils an den Enden der hervorstehenden Struktur befinden, sodass die Vorsprünge über die Kerbe (31) des Riemens (3) gespreizt sind, sodass ein Herunterdrücken desselbigen gewährleistet wird.

3. Halsband nach Anspruch 2, **dadurch gekennzeichnet, dass** der mittlere Teil (21c) der ersten hervorstehenden Struktur (21) gegenüber den beiden Vorsprüngen (21a, 21b) leicht zurückversetzt ist.

4. Halsband nach Anspruch 1, **dadurch gekennzeichnet, dass** die zweite hervorstehende Struktur (22a), die quer in der Mitte des Bodens (23b) der Schnalle (2) ausgebildet ist, einen Zahn (22a) bildet, dessen seitlicher Teil, der sich auf der der Einführungsrichtung des Riemens (3) gegenüberliegenden Seite befindet, mindestens in einer Linie mit dem Boden (23b) der Schnalle (2) liegt oder leicht zur Einfädelrichtung des Riemens geneigt ist.

5. Halsband nach den Ansprüchen 2 und 4 und gegebenenfalls auch nach Anspruch 3, **dadurch gekennzeichnet, dass** die Größe des Verhältnisses (x/y) im Wesentlichen proportional zu der des Verhältnisses (Dicke der Kerbe zur Dicke des Riemens) ist, gemäß der Beziehung 0,9 EC/EL < x/y < 1,1 EC/EL, wobei der Raum zwischen dem Vorsprung (21a) und dem Boden (23b) durch "y" symbolisiert wird; der Raum zwischen der Oberseite des Zahns (22a) und dem Kamm des Vorsprungs (21a) durch "x" symbolisiert wird; "EL" die Dicke des Riemens darstellt und "EC" die Dicke der Kerbe symbolisiert, deren Wert gleich der Differenz ist zwischen der Dicke (EL) des Riemens (3), von der die Tiefe (p) einer Kerbe (31) abgezogen wird.

6. Halsband nach einem der Ansprüche 1 und 4,
**dadurch gekennzeichnet, dass** der Boden (23b) zusätzlich zu dem Zahn (22a), der sich in seinem mittleren Teil befindet, einen Zahn (22b) umfasst, der sich im proximalen Teil der Schnalle befindet (2) und einen weiteren Zahn (22c), der sich am distalen Teil der Schnalle (2) befindet.

7. Halsband nach Anspruch 6, **dadurch gekennzeichnet, dass** die Zähne (22a, 22b, 22c) um eine Länge gleich voneinander beabstandet sind, die dem Abstand zwischen zwei aufeinanderfolgenden Kerben (31) entspricht, sodass jeder der beiden Zähne (22b) und (22c) beim Durchfädeln des Riemens (3) in die Schnalle (2) in die Kerben (31) eingreift.

8. Halsband nach einem der Ansprüche 1 bis 7,
**dadurch gekennzeichnet, dass** die Kerbe (31) des Riemens (3) einen Querschnitt im Wesentlichen mit der Form eines Parallelogramms, Antiparallelogramms, Dreiecks oder einer Kombination dieser Formen aufweist.

9. Halsband nach einem der Ansprüche 1 bis 8,
**dadurch gekennzeichnet, dass** die Schnalle (2) an jeder ihrer Seitenflächen Öffnungen (4) aufweist, wobei diese Öffnungen gleichzeitig eine Verengungsstruktur sowohl der Decke (23a) als auch des Bodens (23b) der Schnalle (2) begrenzen, wobei die Decke und der Boden der Schnalle durch Beine (24) miteinander verbunden sind.

10. Halsband nach Anspruch 1, **dadurch gekennzeichnet, dass** die Härte des flexiblen Kunststoffmaterials, aus dem das Halsband besteht, zwischen 60 Shore A und 60 Shore D, vorzugsweise zwischen 80 und 95 Shore A liegt.

11. Halsband nach einem der Ansprüche 1 bis 10,
**dadurch gekennzeichnet, dass** das Halsband einen Wirkstoff mit biozider, medizinischer oder kosmetischer Wirkung enthält, wobei der Wirkstoff geeignet ist, eine Behandlungswirkung zu erzielen, die aus insektiziden, insektenabweisenden, anlockenden, antimykotischen, entspannenden, beruhigenden, duftenden, wohltuenden Wirkungen oder eine Kombination davon ausgewählt ist.

## Claims

1. A one-piece collar (1) made of flexible plastics material and intended to be worn by a person or a pet, said plastics material being capable of containing an active material, the collar comprising:
a tightening structure consisting of a buckle (2) located substantially on the proximal part of said collar, the buckle (2) having a hollow interior that defines a tunnel (23) delimited by a top (23a) on the upper part thereof and by a bottom (23b) on the lower part thereof, said tunnel (23) being capable of receiving, longitudinally and by threading, a strap (3) which forms a distal part of the collar (1), the strap (3), the inner face of which intended to be in contact with the bottom (23b) of the buckle (2), having a plurality of indentations which pass through it transversely from side to side, the collar comprising :
on the one hand a first projecting structure (21) formed longitudinally on the top (23a) of the buckle (2), on the other hand, a second projecting structure (22a) formed transversely to the center of the bottom (23b) of the buckle (2), the first and second projecting structures (21, 22a) facing one another without touching, and a space (y) between the first projecting structure (21) and the bottom (23b) is intended for having the strap (3) pass therethrough such that, when the strap (3) is threaded inside the buckle (2) and in order for the collar (1) as a whole to be tightened, the first projecting structure (21) abuts a top face of said strap (3) so as to exert a local holding pressure thereon, and in that the second projecting structure (22a) engages with an indentation (31) in the underside of said strap (3).

2. The collar according to claim 1, **characterized in that** the first projecting structure (21) formed longitudinally on the top (23a) of the buckle (2) also has two bulges (21a, 21b) each located at one of the ends of said projecting structure such that said bulges straddle the indentation (31) in the strap (3) so as to clamp around said strap.

3. The collar according to claim 2, **characterized in that** the central part (21c) of the first projecting structure (21) is slightly set back from the two bulges (21a,21b).

4. The collar according to claim 1, **characterized in that** the second projecting structure (22a) formed transversely to the center of the bottom (23b) of the buckle (2) forms a tooth (22a) of which a lateral part located on the side opposite to an insertion direction of the strap (3) is at least on a line with the bottom of the buckle or is slightly inclined toward the threading direction of the strap.

5. The collar according to claims 2 and 4, and possibly also according to claim 3, **characterized in that** the value of a ratio (x/y) is substantially proportional to that of a ratio of a notch thickness to a strap thickness according to the relationship 0.9 EC/EL(x/y(1.1 EC/EL, wherein the space between the first projecting structure (21a) and the bottom (23b) is symbolized by "y", a space between the second projecting structure (22a) and the edge of one of said bulge (21a) is symbolized by "x"; "EL" represents the strap thickness and "EC" symbolizes the notch thickness, the value of which is equal to a difference between the thickness (EL) of the strap (3) and a depth (p) of one of said indentations (31).

6. The collar according to claims 1 and 4, **characterized in that** the bottom (23b) comprises, in addition to the tooth (22a) localized in the central part, a tooth (22b) located on a proximal part of the buckle (2) and a tooth (22c) located on a distal part of the buckle (2).

7. The collar according to claim 6, **characterized in that** the tooths (22a, 22b, 22c) are spaced from one another by a length corresponding to a spacing between said indentations (31) such that each of the teeth (22b) and (22c) engages with one of said indentations (31) when the strap (3) is threaded into the buckle (2).

8. The collar according to claims 1 to 7, **characterized in that** the indentation (31) in the strap (3) has a cross section that is substantially in the shape of a parallelogram, antiparallelogram, triangle or a combination of these shapes.

9. The collar according to claims 1 to 8, wherein the buckle (2) has openings in each of its lateral faces, said openings delimiting a constriction structure for both the top (23a) and the bottom (23b) of the buckle (2), the top and the bottom of the buckle being interconnected by lugs (24).

10. The collar according to claim 1, **characterized in that** the hardness of the flexible plastics material from which the collar is made is between 60 Shore A and 60 Shore D

11. The collar according to claims 1 to 10, wherein the collar contains an active material that has a biocidal, medicinal or cosmetic effect, said active material being suitable for achieving a treatment action selected from an insecticide action, insect repellant action, attractive action, antifungal action, soothing action, calming action, fragrant action, wellness action or a combination thereof.
